# EUROPÄISCHE PATENTANMELDUNG

(11) **EP 4 495 153 A1**
(43) Veröffentlichungstag der Anmeldung: **22.01.2025**
(21) Anmeldenummer: 23185900.0
(22) Anmeldetag: 17.07.2023
(51) Int. Cl.: C08G 10/00

(54) **VERFAHREN ZUR REINIGUNG EINES SYNTHETISCHEN ROHÖLSTROMS**

(71) Anmelder: OMV Downstream GmbH, 1020 Wien (AT)
(72) Erfinder: MASTALIR, Matthias, 1020 Wien (AT)
(74) Vertreter: SONN Patentanwälte GmbH & Co KG

(57) **Zusammenfassung**

Die vorliegende Erfindung betrifft ein Verfahren zur Reinigung eines synthetischen Rohölstroms (1), das Verfahren umfassend die folgenden Schritte:
- Bereitstellen des synthetischen Rohölstroms (1), wobei der synthetische Rohölstrom (1) aromatische Verbindungen enthält;
- Inkontaktbringen des synthetischen Rohölstroms (1) mit einem Carbonyl-Strom (2) enthaltend mindestens eine Carbonylverbindung ausgewählt aus einem Aldehyd und einem Keton, um ein Gemisch zu bilden, wodurch zumindest ein Teil der aromatischen Verbindungen zu Kondensationsprodukten vernetzt wird; und
- Abscheiden der Kondensationsprodukte aus dem Gemisch, um einen gereinigten synthetischen Rohölstrom (3) zu erhalten.

Die Erfindung betrifft weiters ein Verfahren zur Herstellung eines gereinigten synthetischen Rohölstroms (3).

## Beschreibung

Die vorliegende Erfindung betrifft Verfahren zur Reinigung eines synthetischen Rohölstroms.

Synthetisches Rohöl, teilweise auch als Syncrude bezeichnet, kann aus unterschiedlichen Prozessen gewonnen werden. Beispielsweise kann es sich bei synthetischem Rohöl um Schieferöl handeln, welches durch Pyrolyse aus Ölschiefer gewonnen wird. Eine weitere Quelle sind aus Ölsand gewonnene Kohlenwasserstoffe, insbesondere Bitumen, aus welchen durch Upgrading synthetisches Rohöl erhalten werden kann. Darüber hinaus kann synthetisches Rohöl auch aus Kunststoffmaterial, beispielsweise Kunststoffabfall, durch Cracken hergestellt werden.

Synthetische Rohöle enthalten typischerweise unterschiedliche Verunreinigungen, welche nachteilige Auswirkungen auf Raffinierungsprozesse und Raffinerieanlagen haben können bzw. das Rohöl auch gänzlich ungeeignet für gewisse Raffinierungsprozesse machen können. Art und Gehalt der Verunreinigungen können dabei je nach Quelle und Verfahren zur Gewinnung des synthetischen Rohöls stark variieren.

Ein besonders großes Problem bei der Weiterverarbeitung von synthetischen Rohölen stellt die sogenannte Gum-Bildung dar. Pyrolyseöle enthalten in der Regel unterschiedliche chemische Verbindungen, die dazu neigen können, Ablagerungen zu bilden. Solche Ablagerungen können in der Folge Raffinerieanlagen verstopfen oder anderweitig schädigen, den Reinigungsaufwand erhöhen und die Lebensdauer von Anlagen verkürzen.

Das Problem der Gum-Bildung im Zusammenhang mit synthetischen Rohölen ist noch nicht zufriedenstellend gelöst. Es besteht weiterhin ein Bedarf an Methoden, die Tendenz zur Gum-Bildung von synthetischen Rohölen zu vermindern. Es ist daher eine Aufgabe der vorliegenden Erfindung, Verfahren zur Verfügung zu stellen, um die Gum-Bildung von synthetischen Rohölen zu vermindern.

Die vorliegende Erfindung betrifft daher ein Verfahren zur Reinigung eines synthetischen Rohölstroms, das Verfahren umfassend die folgenden Schritte:
- Bereitstellen des synthetischen Rohölstroms, wobei der synthetische Rohölstrom aromatische Verbindungen enthält;
- Inkontaktbringen des synthetischen Rohölstroms mit einem Carbonyl-Strom enthaltend mindestens eine Carbonylverbindung ausgewählt aus einem Aldehyd und einem Keton, um ein Gemisch zu bilden, wodurch zumindest ein Teil der aromatischen Verbindungen zu Kondensationsprodukten vernetzt wird; und
- Abscheiden der Kondensationsprodukte aus dem Gemisch, um einen gereinigten synthetischen Rohölstrom zu erhalten.

Ein weiterer Aspekt der Erfindung betrifft ein Verfahren zur Herstellung eines gereinigten synthetischen Rohölstroms aus einem Kunststoffmaterial, umfassend die folgenden Schritte:
- Bereitstellen des Kunststoffmaterials, wobei das Kunststoffmaterial eine Carbonylquelle enthält;
- Pyrolysieren des Kunststoffmaterials um einen synthetischen Rohölstrom enthaltend aromatische Verbindungen zu erhalten, wobei aus der Carbonylquelle mindestens eine Carbonylverbindung ausgewählt aus einem Aldehyd und einem Keton freigesetzt wird, und wobei die mindestens eine Carbonylverbindung zumindest einen Teil der aromatischen Verbindungen zu Kondensationsprodukten vernetzt; und
- Abscheiden der Kondensationsprodukte, um einen gereinigten synthetischen Rohölstrom zu erhalten.

Es hat sich gezeigt, dass gewisse aromatische Verbindungen wesentlich zur Bildung von Ablagerungen in synthetischen Rohölen beitragen können. Dies betrifft insbesondere Phenole, Heteroaromaten, Diaromaten, Triaromaten und Polyaromaten. Im Zusammenhang mit der vorliegenden Erfindung hat sich herausgestellt, dass diese aromatischen Verbindungen in synthetischen Rohölen durch die Behandlung mit Aldehyden oder Ketonen zu Kondensationsprodukten vernetzt werden können, welche als unlösliche Feststoffe einfach abgeschieden und entfernt werden können. Die Gum-Bildung wird im erfindungsgemäßen Verfahren also gewissermaßen gezielt herbeigeführt und der "Gum" - d.h. die unlöslichen Kondensationsprodukte - werden abgetrennt. Der gereinigte synthetische Rohölstrom weist daher einen geringeren Aromatengehalt auf und neigt daher in der Folge weniger zur Bildung von Ablagerungen, wodurch Anlagen und insbesondere auch reaktive Oberflächen, welche Katalysatoren aufweisen, geschützt werden können.

Die aromatischen Verbindungen liegen im synthetischen Rohölstrom vorzugsweise gelöst vor. Im Gemisch werden die aromatischen Verbindungen vorzugsweise durch die mindestens eine Carbonylverbindung zu unlöslichen Kondensationsprodukten vernetzt. Diese fallen als unlösliche Feststoffe aus und können so einfach abgetrennt werden. Durch die Behandlung mit Carbonylverbindung kann also eine spontane Fällung von unerwünschten Komponenten erreicht werden. Als "Kondensationsprodukte" werden hierin die Reaktionsprodukte aus den Carbonylverbindungen und den aromatischen Verbindungen bezeichnet. Alternativ zum Begriff "Kondensationsprodukte" kann auch der Begriff "Reaktionsprodukte" verwendet werden.

Die aromatischen Verbindungen sind vorzugsweise ausgewählt aus Phenolen, Heteroaromaten, Diaromaten, Triaromaten und Polyaromaten. Besonders bevorzugt ist es, wenn es sich bei den aromatischen Verbindungen um Phenole handelt. Diese neigen stark zur Bildung von Ablagerungen und lassen sich gleichzeitig besonders gut mit dem erfindungsgemäßen Verfahren entfernen.

Eine mögliche Kondensationsreaktion von Phenolen ist in der Folge mit Formaldehyd (HCHO) als Carbonylverbindung bespielhaft gezeigt:

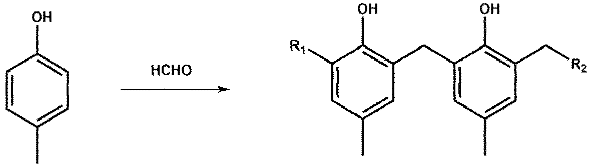

Die Reaktion mit Formaldehyd führt in einem ersten Schritt zu einer Vernetzung zweier Phenole unter Abspaltung von Wasser. Das Reaktionsprodukt dieser ersten Kondensationsreaktion kann in der Folge mit weiteren Ausgangsprodukten und/oder Reaktionsprodukten reagieren, um Polymere zu bilden. Die Polymere können als Feststoffe ausfallen und einfach abgetrennt werden. Die Reaktion kann mit anderen Aldehyden und Ketonen analog ablaufen.

Im Zusammenhang mit der Erfindung ist es besonders bevorzugt, wenn es sich bei den aromatischen Verbindungen um Stickstoff-Heteroaromaten (N-Heteroaromaten) handelt, insbesondere Pyridine und/oder Indole. Diese Verbindungen können neben der Bildung von Ablagerungen einen erheblichen Einfluss auf Katalysatoren haben, insbesondere indem sie aufgrund ihrer Basizität saure FCC- oder HDT-Katalysatoren deaktivieren können. Da N-Heteroaromaten regelmäßig eine höhere Nukleophilie aufweisen als carbocyclische Aromaten, reagieren sie besonders effizient mit Carbonylverbindungen und können mit dem erfindungsgemäßen Verfahren daher besonders gut entfernt werden. Katalysatoren in Raffinerieanlangen können dadurch besonders gut geschützt werden.

Beispielhaft sind hier folgend mögliche Kondensationsreaktionen von Indolen mit Formaldehyd gezeigt:

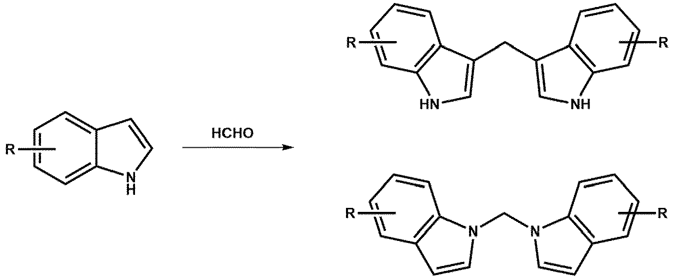

Die gezeigten dimeren Methylen-Verbindungen sind im synthetischen Rohölstrom bereits unlöslich und können somit einfach entfernt werden. Mit anderen Aldehyden und Ketonen kann die Reaktion analog ablaufen. Selbstverständlich sind auch Kondensationsreaktionen zwischen verschiedenen Arten von Aromaten möglich.

Vorzugsweise weist der synthetische Rohölstrom einen Aromatengehalt von mindestens 10 Gew.-%, mehr bevorzugt mindestens 12 Gew.-%, mehr bevorzugt mindestens 14 Gew.-%, mehr bevorzugt mindestens 16 Gew.-%, mehr bevorzugt mindestens 18 Gew.-%, mehr bevorzugt mindestens 20 Gew.-%, auf. Es ist bevorzugt, wenn der synthetische Rohölstrom einen Aromatengehalt von 10 Gew.-% bis 50 Gew.-% aufweist, mehr bevorzugt von 12 Gew.-% bis 45 Gew.-%, mehr bevorzugt von 14 Gew.-% bis 40 Gew.-%, mehr bevorzugt von 16 Gew.-% bis 35 Gew.-%, mehr bevorzugt von 18 Gew.-% bis 30 Gew.-%, mehr bevorzugt von 20 Gew.-% bis 25 Gew.-%.

Vorzugsweise weist der gereinigte synthetische Rohölstrom einen geringeren Aromatengehalt auf als der synthetische Rohölstrom. Das erfindungsgemäße Verfahren kann daher zu einer Reduktion des Aromatengehalts führen. Vorzugsweise beträgt der Aromatengehalt im gereinigten synthetischen Rohölstrom weniger als 20 Gew.-%, mehr bevorzugt weniger als 18 Gew.-%, mehr bevorzugt weniger als 16 Gew.-%, mehr bevorzugt weniger als 14 Gew.-%, mehr bevorzugt weniger als 12 Gew.-%, mehr bevorzugt weniger als 10 Gew.-%. Vorzugsweise ist der Aromatengehalt im gereinigten synthetischen Rohölstrom um mindestens 1 Prozentpunkt (Gew.-%) niedriger als im synthetischen Rohölstrom (z.B. wenn der Aromatengehalt im synthetischen Rohölstrom 20 Gew.-% beträgt, ist es bevorzugt, wenn der Aromatengehalt im gereinigten synthetischen Rohölstrom 19 Gew.-% oder weniger beträgt). Vorzugsweise ist der Aromatengehalt im gereinigten synthetischen Rohölstrom um mindestens 2 Prozentpunkte (Gew.-%), mehr bevorzugt um mindestens 3 Prozentpunkte (Gew.-%) niedriger als im synthetischen Rohölstrom.

Der Aromatengehalt wird vorzugsweise bestimmt gemäß dem Standard ASTM D6591-19. Alternativ oder zusätzlich dazu kann der Aromatengehalt auch bestimmt werden gemäß ASTM D5134-21.

Es hat sich als vorteilhaft erwiesen, wenn das Inkontaktbringen des synthetischen Rohölstroms mit dem Carbonyl-Strom bei einer Temperatur von mindestens 50 °C, vorzugsweise mindestens 60 °C, mehr bevorzugt mindestens 70 °C, mehr bevorzugt mindestens 80 °C, mehr bevorzugt mindestens 100 °C, mehr bevorzugt mindestens 120 °C erfolgt. Insbesondere ist es bevorzugt, wenn das Inkontaktbringen des synthetischen Rohölstroms mit dem Carbonyl-Strom bei einer Temperatur im Bereich von 50 bis 450 °C, mehr bevorzugt 60 bis 350 °C, mehr bevorzugt von 70 bis 250 °C, mehr bevorzugt von 80 bis 180 °C, mehr bevorzugt von 100 bis 170 °C, mehr bevorzugt von 120 bis 160 °C erfolgt. Eine höhere Temperatur kann die Reaktion zwischen den aromatischen Verbindungen und den Carbonylverbindungen begünstigen und daher zu einer noch wirksameren Entfernung der unerwünschten Aromaten führen.

In einer bevorzugten Ausführungsform erfolgt das Inkontaktbringen des synthetischen Rohölstroms mit dem Carbonyl-Strom für eine Dauer von mindestens 0,5 Minuten, bevorzugt mindestens 1 Minute, mehr bevorzugt mindestens 2 Minuten, noch mehr bevorzugt mindestens 5 Minuten, am meisten bevorzugt mindestens 12 Minuten. Das Vorsehen einer längeren Dauer ermöglicht einen vollständigeren Ablauf der Reaktionen, sodass der Gehalt an unerwünschten Aromaten noch stärker reduziert werden kann. Insbesondere ist es daher bevorzugt, wenn die Dauer zwischen 0,5 und 180 Minuten, bevorzugt zwischen 1 und 120 Minuten, mehr bevorzugt zwischen 2 und 60 Minuten, noch mehr bevorzugt zwischen 5 und 30 Minuten, am meisten bevorzugt zwischen 12 und 20 Minuten beträgt. Die Dauer ist dabei vorzugsweise die durchschnittliche Zeitspanne zwischen dem erstmaligen Inkontaktbringen des synthetischen Rohölstroms mit dem Carbonyl-Strom und dem Abscheiden der Kondensationsprodukte aus dem Gemisch, um den gereinigten synthetischen Rohölstrom zu erhalten. Wenn das Verfahren als kontinuierlicher Prozess durchgeführt wird, entspricht die Dauer vorzugsweise der durchschnittlichen Verweilzeit in einer eingesetzten Waschvorrichtung, z.B. in einem Mixer-Settler.

In einer bevorzugten Ausführungsform erfolgt das Inkontaktbringen des synthetischen Rohölstroms mit dem Carbonyl-Strom in einem Druckbehälter. Das Vorsehen eines Druckbehälters ermöglicht die Behandlung bei höheren Drücken und Temperaturen und kann die Kondensationsreaktionen begünstigen. Dies ist insbesondere bevorzugt, wenn der Carbonyl-Strom eine wässrige Lösung ist und/oder wenn das aus dem synthetischen Rohölstrom und dem Carbonyl-Strom gebildete Gemisch Wasser enthält. Wie in der Folge näher beschrieben, kann die Anwesenheit von Wasser die Kondensationsreaktionen begünstigen. Das Vorsehen eines erhöhten Druckes kann es in diesem Fall ermöglichen, dass das Wasser im Gemisch in einem flüssigen Zustand verbleibt.

Vorzugsweise erfolgt das Inkontaktbringen des synthetischen Rohölstroms mit dem Carbonyl-Strom bei einem Druck von mehr als 2 bar, bevorzugt mehr als 3 bar, mehr bevorzugt mehr als 5 bar, noch mehr bevorzugt mehr als 7 bar, am meisten bevorzugt mehr als 10 bar. Besonders bevorzugt ist es, das Inkontaktbringen bei einem Druck im Bereich von 2 bar bis 50 bar, bevorzugt von 3 bar bis 35 bar, mehr bevorzugt von 5 bar bis 25 bar, noch mehr bevorzugt von 7 bar bis 20 bar, am meisten bevorzugt von 10 bar bis 18 bar, erfolgt.

In einer bevorzugten Ausführungsform ist der Carbonyl-Strom eine wässrige Lösung. Dies hat unter anderem den Vorteil, dass die Kondensationsreaktionen zwischen den unerwünschten aromatischen Verbindungen und den Carbonylverbindungen begünstigt werden. Konkret kann durch die im Wasser vorhanden Protonen und Hydroxid-Ionen eine saure oder basische Katalyse der Reaktionen stattfinden.

Dieser vorteilhafte Effekt kann noch verstärkt bzw in einem noch größeren Ausmaß erzielt werden, wenn dem Gemisch eine Säure oder eine Base zugesetzt wird. Je mehr Säure oder Base vorhanden ist, desto schneller und effizienter kann die Reaktion verlaufen. In einer bevorzugten Ausführungsform weist der Carbonyl-Strom daher einen pH-Wert von mindestens 8, mehr bevorzugt mindestens 9, mehr bevorzugt mindestens 10, mehr bevorzugt mindestens 11, mehr bevorzugt mindestens 12 auf. Vorzugsweise liegt der pH-Wert im Bereich von 8 bis 14, bevorzugt von 10 bis 13. Dies ermöglicht eine effiziente basische Katalyse der Kondensationsreaktionen. In einer alternativen Ausführungsform, welche ebenfalls bevorzugt ist, weist der Carbonyl-Strom einen pH-Wert von höchstens 6, mehr bevorzugt höchstens 5, mehr bevorzugt höchstens 4, mehr bevorzugt höchstens 3, mehr bevorzugt höchstens 2 auf. Vorzugsweise beträgt der pH-Wert zwischen 0 und 6, bevorzugt zwischen 1 und 5. Dies ermöglicht eine effiziente saure Katalyse der Kondensationsreaktionen.

In einer besonders bevorzugten Ausführungsform des erfindungsgemäßen Verfahrens erfolgt das Inkontaktbringen des synthetischen Rohölstroms mit dem Carbonyl-Strom in Anwesenheit einer Säure oder einer Base und/oder wird dem Gemisch aus dem synthetischen Rohölstrom und dem Carbonyl-Strom eine Säure oder eine Base zugefügt. Vorzugsweise handelt es sich dabei um eine wässrige Säure oder eine wässrige Base. So können die erwünschten Kondensationsreaktionen durch saure oder basische Katalyse begünstigt werden, wie oben beschrieben.

Im Zusammenhang mit dem erfindungsgemäßen Verfahren kann als Carbonylverbindung jede Art von Aldehyd oder Keton eingesetzt werden. Vorzugsweise ist die mindestens eine Carbonylverbindung ausgewählt aus Formaldehyd, Acetaldehyd, Propionaldehyd, Propenaldehyd, Butyraldehyd, Crotonaldehyd, Aceton, Ethylmethylketon, und/oder Pentanon.

Als besonders vorteilhaft hat es sich dabei herausgestellt, wenn die mindestens eine Carbonylverbindung ein Aldehyd ist. Ohne an einer Theorie gebunden zu sein, vermuten die Erfinder, dass dies einerseits an der höheren Elektrophilie von Aldehyden gegenüber Ketonen liegt und andererseits an der geringeren sterischen Hinderung, wenn die Carbonylgruppe endständig ist. Beide Faktoren begünstigen die gewünschten Reaktionen mit aromatischen Verbindungen. Da diese Faktoren im höchsten Ausmaß auf Formaldehyd zutreffen, ist es besonders bevorzugt, wenn die mindestens eine Carbonylverbindung Formaldehyd ist. Die Vorteile von Aldehyden gegenüber Ketonen im Allgemeinen und die Vorteile von Formaldehyd im Speziellen, gehen auch aus den in Beispiel 1 enthaltenen Daten hervor, worin eine deutlichere Reduktion des Aromatengehalts durch Formaldehyd als durch Aceton festgestellt wurde.

Vorzugsweise beträgt die Konzentration der Carbonylverbindungen im Carbonyl-Strom mindestens 1 Gew.-%, mehr bevorzugt mindestens 5 Gew.-%, mehr bevorzugt mindestens 10 Gew.-%, mehr bevorzugt mindestens 15 Gew.-%, mehr bevorzugt mindestens 20 Gew.-%, mehr bevorzugt mindestens 25 Gew.-%. Vorzugsweise beträgt die Konzentration zwischen 1 Gew.-% und 100 Gew.-%, mehr bevorzugt zwischen 5 Gew.-% und 80 Gew.-%, mehr bevorzugt zwischen 10 Gew.-% und 60 Gew.-%, mehr bevorzugt zwischen 15 Gew.-% und 50 Gew.-%. Der Einsatz so hoher Konzentrationen begünstigt die Reaktion mit den im synthetischen Rohölstrom enthaltenen aromatischen Verbindungen.

Bezogen auf die Gesamtmasse des synthetischen Rohölstromsund des Carbonyl-Stroms ist es bevorzugt, wenn die Konzentration der Carbonylverbindungen mindestens 0,01 Gew.-% beträgt, mehr bevorzugt mindestens 0,02 Gew.-%, mehr bevorzugt mindestens 0,05 Gew.-%, mehr bevorzugt mindestens 0,1 Gew.-%, mehr bevorzugt mindestens 0,2 Gew.-%. Vorzugsweise beträgt die Konzentration der Carbonylverbindungen bezogen auf die Gesamtmasse des synthetischen Rohölstroms und des Carbonyl-Stroms von 0,01 Gew.-% bis 5 Gew.-%, bevorzugt von 0,02 Gew.-% bis 2 Gew.-%, mehr bevorzugt von 0,05 Gew.-% bis 0,5 Gew.-%.

In einer bevorzugten Ausführungsform beträgt das volumetrische Mischverhältnis zwischen dem synthetischen Rohölstrom und dem Carbonyl-Strom von 10:1 bis 1:5, mehr bevorzugt von 5:1 bis 1:2,5, mehr bevorzugt von 1,5:1 bis 1:1,5. Solche Mischverhältnisse haben sich als besonders gut zur Behandlung des synthetischen Rohölstroms erwiesen.

In einer bevorzugten Ausführungsform weist das aus dem synthetischen Rohölstrom und dem Carbonyl-Strom gebildete Gemisch eine polare Phase und eine apolare Phase auf, wobei die Kondensationsprodukte mehrheitlich in der polaren Phase vorliegen. Vorzugsweise wird das Abscheiden der Kondensationsprodukte aus dem Gemisch dabei durch Abtrennen der polaren Phase erreicht. Wenn es sich bei dem Carbonyl-Strom um eine wässrige Lösung handelt, kann es sich bei der polaren Phase um eine wässrige Phase handeln. Die Kondensationsprodukte können so auf besonders einfache Art und Weise abgetrennt werden.

Als besonders vorteilhaft hat es sich erwiesen, wenn das Inkontaktbringen mit dem Carbonyl-Strom und das nachfolgende Abtrennen der polaren Phase in einem Mixer-Settler durchgeführt wird. Typischerweise umfassen Mixer-Settler eine kontinuierlich betriebene Mischzone und eine kontinuierlich betriebene Absetzzone und erlauben daher die Durchführung des Mischens des synthetischen Rohölstroms mit dem Carbonyl-Strom, sowie des anschließenden Absetzvorgangs zur Trennung der Phasen und Abscheidung des gereinigten synthetischen Rohölstroms in einem kontinuierlichen Prozess.

In einer vorteilhaften Ausführungsform wird die abgetrennte polare Phase zumindest teilweise rückgeführt und zumindest als Teil des Carbonyl-Stroms wiederverwendet. Es hat sich herausgestellt, dass die abgetrennte polare Phase häufig noch einen signifikanten Anteil an unverbrauchten Carbonylverbindungen enthält. Wenn der Abwasserstrom teilweise im Kreis geführt wird, kann die Carbonylverbindung daher besser genutzt werden. Beispielsweise kann die Kreisführung von 1 bis 25 Umläufe umfassen. Diese Kreislaufführung kann energetische Vorteile haben und zu geringeren Kosten führen und ermöglicht außerdem eine kleinere Ausführung der Anlage. Der Anteil an verbrauchten Chemikalien kann auch durch eine Zudosierung im Kreislauf durch frisches Medium ausgeglichen werden.

In einer bevorzugten Ausführungsform des erfindungsgemäßen Verfahrens wird der gereinigte synthetischen Rohölstrom mit einer wässrigen Waschlösung gewaschen, um einen zweiten gereinigten synthetischen Rohölstrom zu erhalten. Durch einen solchen zusätzlichen Waschschritt können im synthetischen Rohölstrom enthaltene Verunreinigungen noch gründlicher entfernt werden.

Vorzugsweise handelt es sich bei der wässrigen Waschlösung um eine saure wässrige Waschlösung. Insbesondere ist es bevorzugt, wenn der pH-Wert der wässrigen Waschlösung weniger als 6 beträgt, bevorzugt weniger als 5, mehr bevorzugt weniger als 4, mehr bevorzugt weniger als 3,5. Ein solcher pH-Wert ist insbesondere bevorzugt, wenn der Carbonyl-Strom einen basischen pH-Wert aufweist. So kann auf eine basische Wäsche in Form der Behandlung mit dem Carbonyl-Storm eine saure Wäsche folgen.

Das Waschen des gereinigten synthetischen Rohölstroms mit einer sauren Waschlösung kann die Entfernung basischer Verbindungen wie Amine, Pyridine und anderer basischer Verunreinigungen verbessern. Wenn der Carbonyl-Strom einen basischen pH-Wert aufweist, insbesondere wenn es ein wässriger Strom ist, kann durch die Behandlung mit dem Carbonyl-Strom eine basische Hydrolyse von Neutralverbindungen stattgefunden haben. In diesem Fall können zusätzlich basische Hydrolyseprodukte, z.B. Amine, durch die saure Wäsche entfernt werden. Insbesondere können durch diesen Schritt auch polycyclische Amine effizient entfernt werden können. Polycyclische Amine können in synthetischen Rohölen, insbesondere in Pyrolyseölen, in größerem Ausmaß vorliegen. Sie können sich beispielsweise in Cracking-Prozessen in Anwesenheit einer Stickstoffquelle bilden, beispielsweise Additive oder Polymere wie Polyamid (PA), Polyacrylnitril (PAN) oder Acrylnitril-Butadien-Styrol-Copolymer (ABS). Bei polycyclischen Aminen kann es sich beispielsweise um polykondensierte - gesättigte, einfach und mehrfach ungesättigte oder aromatische Ringsysteme handeln. Sie können teilweise im synthetischen Rohöl gelöst oder im kolloidalen Bereich in Schwebe vorliegen und resultieren häufig in unerwünschten Ablagerungen und damit in einer erschwerten Reinigung der Anlage. Außerdem können sie zu einer Verlegung von aktiven Oberflächen von Katalysatoren bei Folgeanwendungen führen. Zusätzlich können sie unerwünschte Verbindungen wie Salze, Chlorid, Schwermetalle oder Sulfide in der organischen Produktphase lösen. Es hat sich gezeigt, dass durch den sauren Waschschritt polycyclische Amine effizient entfernt werden können. Für die Entfernung von polycyclischen Aminen hat es sich dabei als vorteilhaft erwiesen, wenn der saure Waschschritt bei einer Temperatur von mindestens 20 °C erfolgt. Besonders effizient ist die Entfernung, wenn die Temperatur mindestens 50 °C beträgt.

Allerdings hat es als vorteilhaft erwiesen, wenn die Temperatur im sauren Waschschritt nicht zu hoch ist, insbesondere niedriger als die Temperatur des Inkontaktbringens mit dem Carbonyl-Strom. So hat sich gezeigt, dass hohe Temperaturen im sauren Waschschritt zu einer Reduktion der Produktausbeute sowie zur Bildung von Verunreinigungen führen können. Es hat sich daher als vorteilhaft erwiesen, den sauren Waschschritt bei einer Temperatur von weniger als 120 °C durchzuführen. Insbesondere können diese nachteiligen Effekte minimiert werden, wenn die Temperatur weniger als 100 °C, noch mehr bevorzugt weniger als 95 °C, beträgt.

Ein zusätzlicher Vorteil der niedrigeren Temperatur im sauren Waschschritt ist, dass die Anforderungen an das Material der Waschvorrichtung deutlich geringer sind. Das Vorliegen saurer Lösungen bei hohen Temperaturen erfordert häufig die Verwendung spezieller Materialien bzw. Beschichtungen, die zu einer signifikanten Kostenerhöhung führen würden. In einer bevorzugten Ausführungsform erfolgt das Waschen des gereinigten synthetischen Rohölstroms mit der sauren Waschlösung daher bei einer niedrigeren Temperatur als das Inkontaktbringen des synthetischen Rohölstroms mit dem Carbonyl-Strom.

In einer bevorzugten Ausführungsform enthält die wässrige Waschlösung Schwefelsäure. Vorzugsweise beträgt die Konzentration von Schwefelsäure zwischen 0,5 und 10 Gew.-%, insbesondere zwischen 1 und 5 Gew.-%.

Es hat sich zudem als vorteilhaft erwiesen, wenn das volumetrische Mischverhältnis zwischen dem gereinigten synthetischen Rohölstrom und der wässrigen Waschlösung von 10:1 bis 1:5, vorzugsweise von 5:1 bis 1:2,5, noch mehr bevorzugt von 2,5:1 bis 1:1,5 beträgt. Ein solches Mischverhältnis ermöglicht eine besonders effiziente Entfernung von basischen Verunreinigungen.

Das erfindungsgemäße Verfahren kann auch weitere Waschschritte enthalten. Beispielsweise ist es möglich, dass der gereinigte synthetische Rohölstrom weitere Wasch- oder Reinigungsschritte durchläuft, bevor das Waschen mit der wässrigen Waschlösung stattfindet. Bevorzugt ist es jedoch, wenn zwischen dem Abscheiden der Kondensationsprodukte, um den gereinigten synthetischen Rohölstrom zu erhalten und dem Waschen des gereinigten synthetischen Rohölstroms mit der wässrigen Waschlösung kein weiterer Reinigungsschritt erfolgt, insbesondere kein Waschschritt, kein Filtrierungsschritt und/oder kein Hydrotreating-Schritt. Dies hat unter anderem den Vorteil, dass basische Produkte, welche durch die basische Hydrolyse aus Neutralverbindungen entstehen, im unmittelbar auf den basischen Waschschritt folgenden vorzugsweise sauren Waschschritt entfernt werden können.

In einer weiteren bevorzugten Ausführungsform des erfindungsgemäßen Verfahrens wird der zweite gereinigte synthetische Rohölstrom mit einer weiteren wässrigen Waschlösung gewaschen, um einen dritten gereinigten synthetischen Rohölstrom zu erhalten. Das Vorsehen eines solchen weiteren Waschschritts ermöglicht eine besonders gründliche Entfernung von Verunreinigungen, welche nach dem sauren Waschschritt noch vorhanden sein können.

In diesem Zusammenhang ist es besonders bevorzugt, wenn der pH-Wert der weiteren wässrigen Waschlösung im Bereich von 3 bis 13, bevorzugt von 4 bis 12, mehr bevorzugt von 5 bis 11, noch mehr bevorzugt von 6 bis 10, noch mehr bevorzugt von 6,5 bis 9, am meisten bevorzugt von 7 bis 8 liegt. Ein pH-Wert in diesem Bereich ist besonders effektiv für die Entfernung von kleinen polaren neutralen Molekülen sowie von anorganischen und organischen Salzen. Besonders vorteilhaft ist es, wenn die weitere wässrige Waschlösung basisch oder im Wesentlichen neutral, insbesondere im Wesentlichen neutral, ist.

Im Zusammenhang mit der Erfindung ist es bevorzugt, wenn das Verfahren zur Reinigung eines synthetischen Rohölstroms ein kontinuierliches Verfahren ist. Gegenüber einem Chargenprozess hat dies den Vorteil, dass eine höhere Produktivität und geringere Stillstandszeiten erreicht werden.

Das Waschen der jeweiligen Rohölströme mit den jeweiligen Waschlösungen wie hierin beschrieben kann das Vermischen des Rohölstroms mit der Waschlösung umfassen, gefolgt vom Abscheiden des gereinigten Rohölstroms von der wässrigen Waschlösung. Vorzugsweise werden die Waschschritte des erfindungsgemäßen Verfahrens in einem mechanischen Mischer, in einem statischen Mischer und/oder in einem Mixer-Settler durchgeführt. Als besonders vorteilhaft hat es sich erwiesen, wenn die Waschschritte jeweils in einem Mixer-Settler durchgeführt werden, wie oben für die Behandlung mit dem Carbonyl-Strom beschrieben.

Im Zusammenhang mit der vorliegenden Erfindung hat sich herausgestellt, dass synthetischen Rohöle insbesondere dann vermehrt zur Gum-Bildung neigen, wenn sie zusätzlich zu den oben beschrieben aromatischen Verbindungen einen hohen Gehalt an Dienverbindungen aufweisen. Reaktive Diene können also ebenso als Gum-Bildner wirken und zu schädlichen Ablagerungen in Raffinerieanlagen führen. Beispielsweise können Diene teilweise Diels-Alder-Reaktionen eingehen und dadurch zu Vernetzungen zwischen Molekülen und schlussendlich zu Ablagerungen führen. Außerdem können Diene mit Katalysatoren in Hydrieranlagen stabile Komplexe bilden. Es hat sich im Rahmen der Erfindung daher als günstig herausgestellt, neben dem Gehalt an aromatischen Verbindungen auch den Dien-Gehalt von synthetischen Rohölen zu reduzieren.

Es hat sich gezeigt, dass die im Carbonyl-Strom enthaltenen Carbonylverbindungen auch mit Dienverbindungen reagieren können. Carbonylverbindungen können mit Dienverbindungen Oxo-Diels-Alder Reaktionen eingehen, wodurch die Dienverbindungen in Dien-freie Produkte überführt werden. Allerdings sind Oxo-Diels-Alder Reaktionen energetisch ungünstig und finden daher nur in geringem Ausmaß statt.

Im Zusammenhang mit der Erfindung hat sich überraschenderweise gezeigt, dass die Entfernung von Dienverbindungen deutlich begünstigt werden kann, wenn das Inkontaktbringen des synthetischen Rohölstroms mit dem Carbonyl-Strom in Anwesenheit einer Stickstoffverbindung erfolgt und/oder wenn dem Gemisch aus dem synthetischen Rohölstrom und dem Carbonyl-Strom eine Zusammensetzung enthaltend eine Stickstoffverbindung zugefügt wird.

In Versuchen haben die Erfinder überraschenderweise festgestellt, dass die Zugabe von Stickstoffverbindungen, wie etwa Aminen, zu einer charakteristischen orange-roten Färbung führen kann. Eine nähere Untersuchung hat ergeben, dass Tetrahydropyridine gebildet werden können, auf welche diese Färbung nach Meinung der Erfinder zurückzuführen ist. Gleichzeitig wurde eine starke Verringerung der Dien-Zahl, d.h. eine Entfernung von Dienverbindungen, festgestellt. Dies ist unter anderem auch in

### Beispiel 2 gezeigt.

Nach Meinung der Erfinder liegt der Grund für die effizientere Entfernung von Dienverbindungen in Anwesenheit von Aminen darin, dass die Amine mit den Carbonylverbindungen zu Iminen reagieren können. Diese Imine sind deutlich nukleophiler als die Ausgangs-Carbonylverbindungen, weswegen sie auch deutlich leichter Hetero-Diels-Alder-Reaktionen mit Dienen eingehen. Statt einer Oxo-Diels-Alder Reaktion findet eine deutlich leichter ablaufende Aza-Diels-Alder Reaktion statt. Dies ist beispielhaft im folgenden Schema dargestellt:

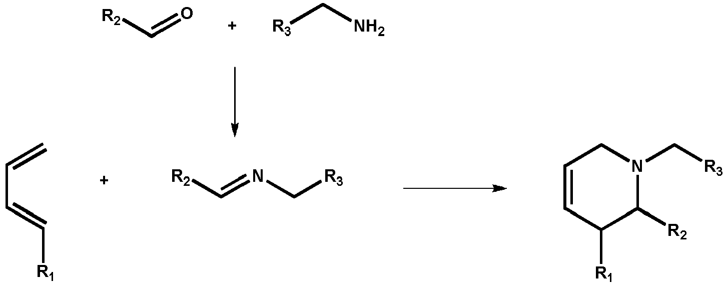

In diesem Schema ist als Beispiel ein primäres Amin gezeigt. Die Reaktion kann auf die gleiche Art mit NH₃ oder anderen Verbindungen ablaufen. Grundsätzlich können aus den verschiedenen im Gemisch ablaufenden Reaktionen auch offene Systeme entstehen, diese können jedoch ebenfalls auf die gleiche Art mitabgetrennt und somit entfernt werden.

In einer bevorzugten Ausführungsform umfasst das erfindungsgemäße Verfahren zur Reinigung des synthetischen Rohölstroms die folgenden Schritte:
- Bereitstellen des synthetischen Rohölstroms, wobei der synthetische Rohölstrom aromatische Verbindungen und Dienverbindungen enthält und vorzugsweise eine Dien-Zahl von mindestens 0,1 g/100g aufweist;
- Inkontaktbringen des synthetischen Rohölstroms mit einem Carbonyl-Strom enthaltend mindestens eine Carbonylverbindung ausgewählt aus einem Aldehyd und einem Keton, um ein Gemisch zu bilden, wodurch zumindest ein Teil der aromatischen Verbindungen zu Kondensationsprodukten vernetzt wird; wobei das Inkontaktbringen des synthetischen Rohölstroms mit dem Carbonyl-Strom in Anwesenheit einer Stickstoffverbindung erfolgt und/oder wobei dem Gemisch aus dem synthetischen Rohölstrom und dem Carbonyl-Strom eine Zusammensetzung enthaltend eine Stickstoffverbindung zugefügt wird, wodurch zumindest ein Teil der Dienverbindungen in Dien-freie Produkte umgesetzt wird; und
- Abscheiden der Kondensationsprodukte und der Dien-freien Produkte aus dem Gemisch, um einen gereinigten synthetischen Rohölstrom zu erhalten.

Bei den im synthetischen Rohölstrom enthaltenen Dienverbindungen handelt es sich vorzugsweise um Verbindungen enthaltend konjugierte oder kumulierte Kohlenstoff-Kohlenstoff-Doppelbindungen, insbesondere konjugierte Kohlenstoff-Kohlenstoff-Doppelbindungen. Solche Verbindungen neigen insbesondere zur Gum-Bildung, beispielsweise durch Diels-Alder Reaktionen, und können mit dem erfindungsgemäßen Verfahren besonders gut entfernt werden.

Die Fachperson ist mit Methoden zur Bestimmung der Dien-Zahl vertraut. Vorzugsweise wird die Dien-Zahl gemäß dem Standard ASTM UOP326-07 bestimmt.

Der synthetische Rohölstrom weist vorzugsweise eine Dien-Zahl von mindestens 0,1 g/100g auf, bevorzugt mindestens 0,2 g/100g, mehr bevorzugt mindestens 0,3 g/100g, mehr bevorzugt mindestens 0,4 g/100g, mehr bevorzugt mindestens 0,5 g/100g, mehr bevorzugt mindestens 0,6 g/100g, mehr bevorzugt mindestens 0,7 g/100g, mehr bevorzugt mindestens 0,8 g/100g, mehr bevorzugt mindestens 0,9 g/100g, mehr bevorzugt mindestens 1,0 g/100g, mehr bevorzugt mindestens 1,1 g/100g, mehr bevorzugt mindestens 1,2 g/100g, mehr bevorzugt mindestens 1,3 g/100g, mehr bevorzugt mindestens 1,4 g/100g, mehr bevorzugt mindestens 1,5 g/100g, mehr bevorzugt mindestens 1,6 g/100g, mehr bevorzugt mindestens 1,7 g/100g, mehr bevorzugt mindestens 1,8 g/100g, mehr bevorzugt mindestens 1,9 g/100g, mehr bevorzugt mindestens 2,0 g/100g. Vorzugsweise weist der synthetische Rohölstrom eine Dien-Zahl im Bereich von 0,1 g/100g bis 15 g/100g auf, mehr bevorzugt von 1,0 g/100g bis 12 g/100g, insbesondere von 1,5 g/100g bis 10 g/100g.

Der gereinigte synthetische Rohölstrom weist vorzugsweise eine geringere Dien-Zahl auf als der synthetische Rohölstrom. Vorzugsweise weist der gereinigte synthetische Rohölstrom eine Dien-Zahl von weniger als 5 g/100g auf, mehr bevorzugt weniger als 4 g/100g, mehr bevorzugt weniger als 3 g/100g, mehr bevorzugt weniger als 2 g/100g, mehr bevorzugt weniger als 1,5 g/100g, mehr bevorzugt weniger als 1 g/100g, mehr bevorzugt weniger als 0,9 g/100g, mehr bevorzugt weniger als 0,8 g/100g, mehr bevorzugt weniger als 0,7 g/100g, mehr bevorzugt weniger als 0,6 g/100g, mehr bevorzugt weniger als 0,5 g/100g. Vorzugsweise weist der gereinigte synthetische Rohölstrom eine Dien-Zahl im Bereich von 0,01 g/100g bis 5g/100g auf, mehr bevorzugt von 0,1 g/100g bis 2 g/100g, insbesondere von 0,2 g/100g bis 1 g/100g.

Vorzugsweise ist die mindestens eine Stickstoffverbindung ausgewählt ist aus Ammoniak, einem primären Amin, und/oder einem sekundären Amin. Diese Stickstoffverbindungen haben sich als gut geeignet für die Entfernung von Dienverbindungen erwiesen. Es hat sich gezeigt, dass die Reaktionen umso bevorzugter ablaufen, je kleiner die Stickstoffverbindung handelt. Als besonders günstig haben sich primäre Amine und Ammoniak erwiesen, insbesondere Ammoniak.

Vorzugsweise ist die mindestens eine Stickstoffverbindung ausgewählt aus Ammoniak, Methylamin, Dimethylamin, Ethylamin, Diethylamin, Ethanolamin, Diethanolamin, 3-Methoxypropylamin, Dibutylamin, Morpholin, und/oder Triethylamin; vorzugsweise Ammoniak.

Es hat sich gezeigt, dass die Entfernung von Dienverbindungen zusätzlich begünstigt werden kann, wenn eine hohe Konzentration von Stickstoffverbindungen eingesetzt wird. Es ist daher bevorzugt, wenn die Konzentration der Stickstoffverbindungen bezogen auf die Gesamtmasse des synthetischen Rohölstroms und des Carbonyl-Stroms mindestens 0,01 Gew.-% beträgt, mehr bevorzugt mindestens 0,02 Gew.-%, mehr bevorzugt mindestens 0,05 Gew.-%, mehr bevorzugt mindestens 0,1 Gew.-%, mehr bevorzugt mindestens 0,2 Gew.-%. Vorzugsweise beträgt die Konzentration der Stickstoffverbindungen bezogen auf die Gesamtmasse des synthetischen Rohölstroms und des Carbonyl-Stroms von 0,01 Gew.-% bis 5 Gew.-%, bevorzugt von 0,02 Gew.-% bis 2 Gew.-%, mehr bevorzugt von 0,05 Gew.-% bis 0,5 Gew.-%.

Es hat sich weiters als günstig erwiesen, wenn die Carbonylverbindungen und die Stickstoffverbindungen in einer ähnlichen Konzentration vorliegen. Nach Meinung der Erfinder liegt dies daran, dass jeweils ein Molekül der Carbonylverbindung mit einem Molekül der Stickstoffverbindung zu einem Imin reagieren kann. In einer bevorzugten Ausführungsform beträgt das Stoffmengenverhältnis der Carbonylverbindungen zu den Stickstoffverbindungen im Gemisch aus dem synthetischen Rohölstrom und dem Carbonyl-Strom daher zwischen 1:5 und 5:1, bevorzugt zwischen 1:2 und 2:1 beträgt.

Das Abscheiden der Dien-freien Produkte kann auf die gleiche Art erfolgen wie oben für die Kondensationsprodukte beschrieben; insbesondere können die Dien-freien Produkte und die Kondensationsprodukte gemeinsam abgeschieden werden. Bevorzugt werden die Kondensationsprodukte und die Dien-freien Produkte gemeinsam über eine polare Phase, vorzugsweise wässrige Phase, insbesondere in einem Mixer-Settler abgeschieden. Vorzugsweise liegen die Dien-freien Produkte in der polaren Phase zumindest teilweise gelöst und/oder zumindest teilweise als Partikel vor.

In einer bevorzugten Ausführungsform des erfindungsgemäßen Verfahrens wird der gereinigte synthetische Rohölstrom, der zweite gereinigte synthetische Rohölstrom oder der dritte gereinigte synthetische Rohölstrom einer Hydrierungsanlage zugeführt. Es hat sich herausgestellt, dass die Reduktion des Dien-Gehalts im synthetischen Rohölstrom insbesondere im Zuge einer Hydrierung in einer Hydrierungsanlage besonders vorteilhaft ist, da Diene in solchen Anlagen stabile Komplexe mit Katalysatoren bilden können. Die Verwendung des erfindungsgemäßen Verfahrens in Kombination mit einer Hydrierung kann somit die Lebensdauer der Hydrierungsanlagen und insbesondere der eingesetzten Katalysatoren erheblich verbessern.

Im Zusammenhang mit der Erfindung wird unter einem "synthetischen Rohölstrom" vorzugsweise ein Stoffstrom enthaltend ein synthetisches Rohöl oder eine Fraktion eines synthetischen Rohöls verstanden. Vorzugsweise besteht der synthetische Rohölstrom aus synthetischem Rohöl oder einer Fraktion davon. Im Rahmen der Erfindung ist es besonders bevorzugt, wenn der synthetische Rohölstrom ein Pyrolyseöl oder eine Fraktion davon aufweist, insbesondere daraus besteht. Vorzugsweise ist das Pyrolyseöl ein aus Biomasse, insbesondere Holz, und/oder Kunststoff gewonnenes Pyrolyseöl. Als besonders geeignet hat sich das erfindungsgemäße Verfahren erwiesen, wenn der synthetische Rohölstrom ein aus der Depolymerisation von Biomasse oder Kunststoffmaterial, insbesondere Kunststoffmaterial, gewonnenes Kohlenwasserstoffgemisch ist. Vorzugsweise handelt es sich beim synthetischen Rohölstrom daher um ein Kunststoffpyrolysat oder um eine Fraktion davon, oder um ein Biomasse-, insbesondere Holzpyrolysat, oder um eine Fraktion davon. Das erfindungsgemäße Verfahren ist jedoch ebenfalls gut für andere synthetische Rohöle und Fraktionen davon geeignet. In weiteren bevorzugten Ausführungsformen weist der synthetische Rohölstrom daher Schieferöl oder upgegradetes Bitumen auf, vorzugsweise besteht er daraus.

In einer besonders bevorzugten Ausführungsform wird der synthetischen Rohölstrom daher durch Depolymerisation von Kunststoffmaterial, insbesondere von Kunststoffabfall, erzeugt. Die Fachperson ist mit der Herstellung eines synthetischen Rohölstroms durch Depolymerisation von Kunststoffmaterial vertraut. Solche Verfahren sind beispielsweise aus der WO 2012/149590 A1 und der US 6,060,631 A bekannt.

In einer bevorzugten Ausführungsform weist das Kunststoffmaterial Polyethylen (PE), Polypropylen (PP), Polystyrol (PS), Polyvinylchlorid (PVC), Polyethylenterephthalat (PET), Polyamid (PA), Styrol-Acrylnitril (SAN) und/oder Acrylnitril-Butadien-Styrol (ABS) auf. Das erfindungsgemäße Verfahren hat sich als besonders gut geeignet erwiesen, um Pyrolyseöle aus den genannten Kunststoffmaterialien zu reinigen.

Es hat sich überraschenderweise gezeigt, dass die erfindungsgemäßen Effekte zumindest in einem gewissen Maß auch dadurch erreicht werden können, dass das Kunststoffmaterial eine Carbonylquelle enthält, aus welcher im Zuge der Pyrolyse mindestens eine Carbonylverbindung ausgewählt aus einem Aldehyd und einem Keton freigesetzt wird. Besonders bevorzugt ist es, wenn es sich bei der Carbonylquelle um eine Aldehydquelle handelt, wobei während der Pyrolyse aus der Aldehydquelle Aldehyde freigesetzt werden und wobei die Aldehyde zumindest einen Teil der aromatischen Verbindungen zu Kondensationsprodukten vernetzten. In diesem Fall können ähnliche Effekte erzielt werden, wie wenn die Carbonylverbindung extern durch einen Carbonyl-Strom zugeführt wird. Statt der externen Zugabe der Carbonylverbindungen entstehen diese intern während des Verfahrens, was zu einer Vereinfachung des Verfahrens führt. Vorzugsweise wird die Carbonylquelle (bzw. die Aldehydquelle) während der Pyrolyse zumindest teilweise zersetzt, wodurch die mindestens eine Carbonylverbindung (bzw. die Aldehyde) gebildet wird.

Selbst wenn das Kunststoffmaterial eine Carbonylquelle enthält, kann es aber immer noch vorteilhaft sein, zusätzlich einen Carbonyl-Strom enthaltend mindestens eine Carbonylverbindung zuzufügen, um die Menge an für die erwünschten Vernetzungsreaktionen verfügbarer Carbonylverbindung weiter zu erhöhen.

Überraschenderweise hat sich herausgestellt, dass Zellulose und/oder Stärke besonders gut geeignete Carbonylquellen darstellen. Es hat sich gezeigt, dass sich diese Materialien bei den hohen Temperaturen während der Pyrolyse zersetzen, wobei Aldehyde entstehen, die in der Folge die gewünschten Reaktionen eingehen können. Zellulose und/oder Stärke können daher auch als Aldehydquellen bezeichnet werden. Dies hat sich als besonders günstig erwiesen, da Zellulose und Stärke in unterschiedlichen Abfällen, etwa Altpapier oder Biomasse vorkommen. Vorteilhafterweise können mit dem erfindungsgemäßen Verfahren somit gewisse Anteile von Papierabfall und/oder Biomasse mit einem Kunststoffabfall mitverarbeitet werden, was zu einem synergistischen Effekt zur Entfernung von unterwünschten aromatischen Verbindungen und/oder Dienverbindungen im Pyrolyseöl führt. Ebenso können Mischabfälle genutzt werden, welche neben Kunststoff auch gewisse Mengen von Papier und/oder Biomasse enthalten.

Die Carbonylquelle umfasst vorzugsweise Zellulose und/oder Stärke, vorzugsweise besteht sie daraus. Bei der Zellulose und/oder Stärke kann es sich um modifizierte Zellulose und/oder Stärke handeln, insbesondere HES, Celluloseacetat, HMC, und/oder HMS. Es kann sich aber auch um unmodifizierte Zellulose und/oder Stärke handeln.

In einer bevorzugten Ausführungsform umfasst die Carbonylquelle Papier, vorzugsweise besteht sie daraus.

Vorzugsweise beträgt die Konzentration der Carbonylquelle im Kunststoffmaterial mindestens 0,1 Gew.-%, mehr bevorzugt mindestens 0,2 Gew.-%, mehr bevorzugt mindestens 0,5 Gew.-%, mehr bevorzugt mindestens 1 Gew.-%, mehr bevorzugt mindestens 2 Gew.-%, mehr bevorzugt mindestens 5 Gew.-%. Es hat sich gezeigt, dass eine höhere Konzentration zu einer Bildung größerer Mengen Aldehyde führt und daher zu einer noch besseren Entfernung von Aromaten und/oder Dienverbindungen führen kann. Vorzugsweise beträgt die Konzentration zwischen 0,1 und 15 Gew.-%, mehr bevorzugt zwischen 0,2 und 12 Gew.-%, mehr bevorzugt zwischen 0,5 und 10 Gew.-%, mehr bevorzugt zwischen 1 und 5 Gew.-%.

In einer bevorzugten Ausführungsform enthält das Kunststoffmaterial stickstoffhaltige Polymere, wobei beim Pyrolysieren des Kunststoffmaterials die stickstoffhaltigen Polymere zumindest teilweise zersetzt werden und mindestens eine Stickstoffverbindung ausgewählt aus Ammoniak, einem primären Amin, und/oder einem sekundären Amin gebildet wird.

Es hat sich gezeigt, dass die im Zusammenhang mit dem erfindungsgemäßen Verfahren bevorzugte Anwesenheit einer Stickstoffverbindung beim Inkontaktbringen des synthetischen Rohölstroms mit dem Carbonyl-Strom zumindest teilweise auch dadurch erzielt werden kann, dass das Kunststoffmaterial eine Stickstoffquelle in Form von stickstoffhaltigen Polymeren aufweist. Dadurch können die oben beschriebenen Vorteile erreicht werden, insbesondere die verbesserte Entfernung von Dienverbindungen. Diese Vorteile können auch dann auftreten, wenn die Carbonylverbindung nicht in Form des Carbonyl-Stroms zugeführt wird, sondern wie oben beschrieben aus der Carbonylquelle während der Pyrolyse entsteht.

Vorzugsweise umfassen die stickstoffhaltigen Polymere Polyamide, vorzugsweise bestehen sie daraus. Besonders bevorzugt sind aliphatische Polyamide, insbesondere PA6, PA6.6, PA6.4 und/oder PA11.

In einer bevorzugten Ausführungsform umfassen die stickstoffhaltigen Polymere stickstoffhaltige Biopolymere, vorzugsweise bestehen sie daraus.

Vorzugsweise beträgt die Konzentration der stickstoffhaltigen Polymere im Kunststoffmaterial mindestens 0,1 Gew.-%, mehr bevorzugt mindestens 0,2 Gew.-%, mehr bevorzugt mindestens 0,5 Gew.-%, mehr bevorzugt mindestens 1 Gew.-%, mehr bevorzugt mindestens 2 Gew.-%, mehr bevorzugt mindestens 5 Gew.-%. Es hat sich gezeigt, dass eine höhere Konzentration zu einer Bildung größerer Mengen der mindestens einen Stickstoffverbindung führen können und daher eine noch bessere Entfernung von Dienverbindungen erreicht werden kann. Vorzugsweise beträgt die Konzentration zwischen 0,1 und 30 Gew.-%, mehr bevorzugt zwischen 0,2 und 20 Gew.-%, mehr bevorzugt zwischen 0,5 und 12 Gew.-%, mehr bevorzugt zwischen 1 und 5 Gew.-%.

Sämtliche hierin genannten Parameter beziehen sich, wenn nicht anders gekennzeichnet, auf SATP-Bedingungen nach IUPAC ("Standard Ambient Temperature and Pressure"), insbesondere auf eine Temperatur von 25 °C und einen Druck von 101.300 Pa.

Sämtliche Prozent-Angaben (%) hierin beziehen sich, wenn nicht anders gekennzeichnet, auf Gewichtsprozent.

Sämtliche hierin angegebenen Mischverhältnisse beziehen sich, wenn nicht anders gekennzeichnet, auf volumetrische Mischverhältnisse, d.h. auf Volumenverhältnisse (Volumen:Volumen).

Die vorliegende Erfindung wird durch die folgende Figur sowie die folgenden Beispiele illustriert, auf welche sie selbstverständlich nicht eingeschränkt ist.

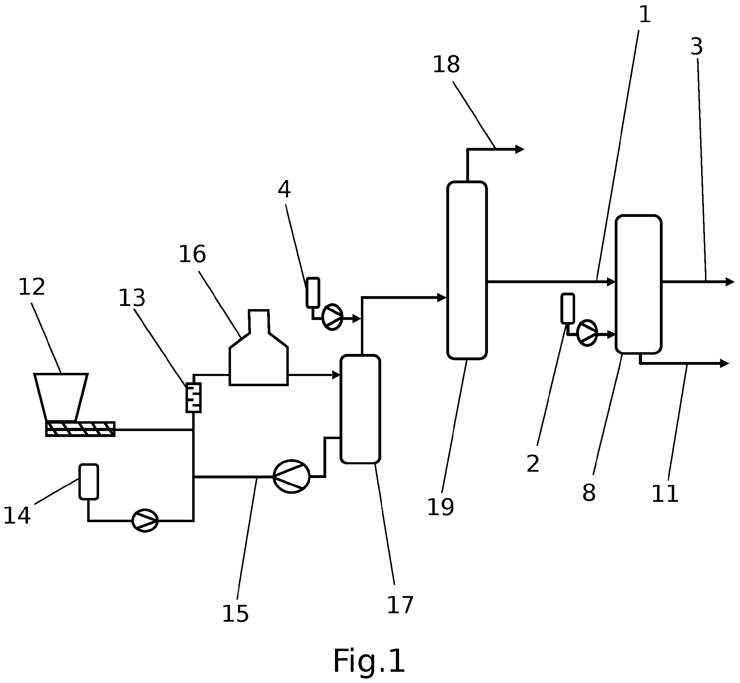

Figur 1 zeigt ein Verfahrensfließschema einer bevorzugten Ausführungsform des erfindungsgemäßen Verfahrens.

In der in Figur 1 gezeigten Ausführungsform wird der synthetische Rohölstrom 1 durch Depolymerisation von Kunststoffmaterial gewonnen. Das Kunststoffmaterial wird einem Extruder 12 kompaktiert, entgast und geschmolzen. Die aus dem Extruder 12 austretende Kunststoffschmelze wird in einem statischen Mischer 13 mit einem externen Lösungsmittel 14, vorzugsweise Schweröl, und/oder mit bereits gecrackten Kunststoffmaterial, welches als Recyclingstrom 15 rückgeführt wird, vermischt, um die Viskosität der Kunststoffschmelze zu reduzieren. Das resultierende Gemisch wird in einen Depolymerisationsreaktor 16 eingebracht, in welchem das Kunststoffmaterial depolymerisiert wird, vorzugsweise bei einer Temperatur zwischen 400 °C und 440 °C. Gecracktes Kunststoffmaterial wird als Kopfprodukt einer Kolonne 17 gewonnen. In der gezeigten Ausführungsform wird das Kopfprodukt in der Folge mit einer Zusammensetzung 4 enthaltend eine Stickstoffverbindung, vorzugsweise NH₃, in Kontakt gebracht. Vom resultierenden Gemisch wird ein Gasstroms 18 in einer weiteren Kolonne 19 abgetrennt und so der synthetische Rohölstrom 1 gewonnen. Der synthetische Rohölstrom enthält aromatische Verbindungen sowie Dienverbindungen und weist vorzugsweise eine Dien-Zahl von mindestens 0,1 g/100g auf.

In der gezeigten Ausführungsform wird der synthetische Rohölstrom 1 mit einem Carbonyl-Strom 2 in einer Mischzone eines ersten Mixer-Settlers 8 vermischt, vorzugsweise in einem volumetrischen Mischverhältnis von 1:1. Beim Carbonyl-Strom 2 handelt es sich vorzugsweise um eine basische wässrige Lösung enthaltend Formaldehyd. Das Gemisch aus dem synthetischen Rohölstrom 1 und dem Carbonyl-Strom 2 hat vorzugsweise eine Temperatur von mindestens 50 °C. Die im synthetischen Rohölstrom 1 enthaltenen aromatischen Verbindungen gehen mit dem Formaldehyd zumindest teilweise Kondensationsreaktionen ein und fallen als unlösliche Kondensationsprodukte aus. Zusätzlich bildet das Formaldehyd mit dem aus der Zusammensetzung 4 stammenden NH₃ Imminverbindungen, welche Aza-Diels-Alder-Reaktionen mit den Dienverbindungen eingehen und diese in Dien-freie Produkte überführen. In der Folge wird die Ölphase von der Wasserphase in einer Absetzzone des Mixer-Settlers 8 getrennt. Die Kondensationsprodukte sowie die Dien-freien Produkte werden dabei mit der Wasserphase abgeschieden. Die durchschnittliche Verweilzeit im ersten Mixer-Settler 8 beträgt vorzugsweise zwischen 5 und 30 Minuten. Die Wasserphase wird als Teil des Abwasserstroms 11 entfernt und die Ölphase wird als gereinigter synthetischer Rohölstrom 3 abgetrennt.

### Beispiel 1: Reduktion des Aromatengehalts von Pyrolyseölen mit Carbonylverbindungen

Um die Entfernung von unerwünschten aromatischen Verbindungen mittels Carbonylverbindungen zu untersuchen, wurden Laborversuche mit Pyrolyseölen durchgeführt. Für Versuche wurden unterschiedliche Pyrolyseöle mit Carbonylverbindungen sowie Stickstoffverbindungen, Säure und/oder Base vermischt und für 1 bis 30 Minuten auf 50 bis 160 °C erhitzt.

Die wässrige Phase wurde im Anschluss entfernt und die Reaktionslösung direkt mittels GC Analysen untersucht, gemäß ASTM D 6591-19 und ASTM D5134-21.

### Versuch 1:

Als Pyrolyseöl wurde ein Leichtprodukt (Siedebereich IBP-175 °C) aus einer Pyrolyse von Altkunststoff eingesetzt. Die eingesetzten Carbonylverbindungen, die Reaktionsbedingungen sowie der im Produkt gemessene Aromatenanteil sind in der folgenden Tabelle dargestellt (Prozentangaben beziehen sich auf Gewichtsprozent) :

| **Carbonylverbindung** | **Weitere Reagenzien** | **Bedingungen** | **Aromaten [%]** |
|---|---|---|---|
| - | - | - | **20,21** |
| Formaldehyd (37%) | H₂SO₄ (5%) | 130 °C, 30 min | **17,66** |
| Formaldehyd (37%) | NaOH (5%) | 130 °C, 30 min | **17,55** |
| Formaldehyd (37%) | Monoethanolamin (95%) | 130 °C, 30 min | **17,48** |
| Formaldehyd (37%) | H₂SO₄ (5%) | 130 °C, 5 min | **17,63** |
| Formaldehyd (37%) | NaOH (5%) | 130 °C, 5 min | **17,57** |
| Formaldehyd (37%) | Monoethanolamin (95%) | 130 °C, 5 min | **17,51** |
| Aceton (99%) | H₂SO₄ (5%) | 130 °C, 30 min | **18,3** |
| Aceton (99%) | NaOH (5%) | 130 °C, 30 min | **18,5** |
| Aceton (99%) | Ammoniak (15%) | 130 °C, 30 min | **18,9** |
| Formaldehyd (37%) | Diethanolamin (97%) | 130 °C, 30 min | **17,3** |

Somit zeigt sich sowohl bei der Behandlung mit Formaldehyd (einem Aldehyd) als auch mit Aceton (einem Keton) eine deutliche Reduktion des Aromatengehalts im Pyrolyseöl. Der Effekt trat unabhängig davon auf, welche weiteren Reagenzien anwesend waren. Beim Aldehyd wurde eine noch stärkere Reduktion als beim Keton beobachtet.

### Versuch 2:

Als Pyrolyseöl wurde ein Schwerprodukt (Siedebereich 175-410 °C) aus einer Pyrolyse von Altkunststoff eingesetzt. Zusätzlich zu dem gesamten Aromatengehalt wurde in diesem Versuch auch der Anteil an 4-Kern-Aromaten bestimmt. Diese Bestimmung wurde durch ASTM D 6591-19 und ASTM D5134-21 durchgeführt. Die eingesetzten Carbonylverbindungen, die Reaktionsbedingungen sowie der im Produkt gemessene Aromatenanteil sind in der folgenden Tabelle dargestellt (Prozentangaben beziehen sich auf Gewichtsprozent):

| **Carbonylverbindung** | **Weitere Reagenzien** | **Bedingungen** | **Aromaten [%]** | **4-Kern Aromaten [%]** |
|---|---|---|---|---|
| - | - | - | **22,1** | **1,6** |
| Formaldehyd (37%) | H₂SO₄ (5%) | 170 °C, 30 min | **19,4** | **1,1** |
| Formaldehyd (37%) | NaOH (5%) | 170 °C, 30 min | **17,8** | **0,8** |
| Formaldehyd (37%) | Monoethanolamin (95%) | 170 °C, 30 min | **19,0** | **0,6** |
| Formaldehyd (37%) | H₂SO₄ (5%) | 120 °C, 30 min | **19,1** | **1,1** |
| Formaldehyd (37%) | NaOH (5%) | 120 °C, 30 min | **17,2** | **0,8** |
| Formaldehyd (37%) | Monoethanolamin (95%) | 120 °C, 30 min | **19,2** | **0,6** |

Die Behandlung mit Carbonylverbindungen führte somit auch zu einer deutlichen Reduktion des Gehalts an 4-Kern Aromaten, wobei diese Entfernung durch die Anwesenheit einer Base gegenüber der Anwesenheit einer Säure noch begünstigt wurde.

### Versuch 3:

Als Pyrolyseöl wurde ein leichtes Gasöl aus einer Altkunststoff-Pyroylse eingesetzt. Die eingesetzten Carbonylverbindungen, die Reaktionsbedingungen sowie der der im Produkt gemessene Aromatenanteil sind in der folgenden Tabelle dargestellt (Prozentangaben beziehen sich auf Gewichtsprozent):

| **Carbonylverbindung** | **Weitere Reagenzien** | **Bedingungen** | **Aromaten [%]** |
|---|---|---|---|
| - | - | - | **24,5** |
| - | H₂SO₄ (5%) | 120 °C, 30 min | **24,5** |
| Formaldehyd (37%) | H₂SO₄ (5%) | 120 °C, 30 min | **22,2** |
| Formaldehyd (37%) | H₂SO₄ (0,1%) | 120 °C, 30 min | **22,2** |
| Aceton (99%) | NaOH (5%) | 120 °C, 30 min | **24,0** |
| Formaldehyd (37%) | NaOH (5%) | 120 °C, 30 min | **21,9** |
| Formaldehyd (37%) | NaOH (0,1%) | 120 °C, 30 min | **22,0** |

### Beispiel 2: Reduktion der Dien-Zahl von Pyrolyseölen mit Carbonyl- und Stickstoffverbindungen

Um die Reduktion der Dien-Zahl von Pyrolyseölen zu untersuchen, wurden Laborversuche durchgeführt. Als Pyrolyseöl wurde ein Leichtprodukt (Siedebereich IBP-175 °C) aus einer Altkunststoff-Pyrolyse eingesetzt. Zur Durchführung der Versuche wurden alle Komponenten miteinander im verschlossenen Gefäß erhitzt. Die wässrige Phase wurde im Anschluss entfernt und die Reaktionslösung direkt mittels GC Analysen untersucht (gemäß ASTM D 6591-19 und ASTM D5134-21).

Die eingesetzten Carbonylverbindungen, die Reaktionsbedingungen sowie die erhaltenen Dien-Zahlen sind in der folgenden Tabelle dargestellt (Prozentangaben beziehen sich auf Gewichtsprozent):

| **Carbonylverbindung** | **Weitere Reagenzien** | **Bedingungen** | **Dien-Zahl [g/100g]** |
|---|---|---|---|
| - | - | - | 2,4 |
| Formaldehyd (37%) | - | 120 °C, 30 min | 1,5 |
| Aceton (99%) | - | 120°C, 30 min | 2,1 |
| Formaldehyd (37%) | Monoethanolamin (95%) | 120 °C, 30 min | **<1,2** |
| Formaldehyd (37%) | Monoethanolamin (95%) | 120 °C, 10 min | **1,3** |
| Formaldehyd (37%) | Monoethanolamin (95%) | 160 °C, 30 min | **<1,2** |
| Formaldehyd (37%) | NH₃ (15%) | 120 °C, 30 min | **<1,2** |
| Aceton (99%) | Monoethanolamin (95%) | 120 °C, 30 min | **1,5** |

Aus den Ergebnissen wird deutlich, dass eine Carbonylverbindung alleine bereits zu einer gewissen Reduktion der Dien-Zahl führte, wobei wiederum das Aldehyd (Formaldehyd) zu einem stärkeren Effekt führte als das Keton (Aceton). Die Reduktion der Dien-Zahl konnte durch den Zusatz einer Stickstoffverbindung noch deutlich verstärkt werden, wobei sich NH₃ als noch besser geeignet erwies als Monoethanolamin.

### Beispiel 3: Reduktion der Dien-Zahl von Pyrolyseölen durch eine Carbonylquelle im Feedstock

Um die Reduktion der Dien-Zahl von Pyrolyseölen durch eine Carbonylquelle im Feedstock zu untersuchen, wurden Testläufe zur Herstellung von synthetischem Rohöl im Wesentlichen wie in Figur 1 beschrieben durchgeführt. Als Ausgangsmaterial wurde ein Kunststoffgemisch eingesetzt, welchem unterschiedliche Mengen von Papier als Carbonylquelle, bzw. konkreter als Aldehydquelle, zugesetzt wurden.

Das Ausgangsmaterial mit oder ohne zugesetztem Papier wurde bei einer Temperatur zwischen 400 °C und 480 °C gecrackt und wie in Figur 1 gezeigt aufgetrennt. In einigen Testläufen wurde dem erhaltenen synthetischem Rohölstrom zudem eine Stickstoffverbindung in einer Menge von 0,5-2 kg/h zugesetzt. Die Zugabe der Stickstoffverbindung erfolgte bei einer Temperatur von 300-400 °C. Die Kondensationsprodukte und Dien-freien Produkte wurden wie oben beschrieben über eine polare Phase abgetrennt.

Die Dien-Zahlen zu den einzelnen Testläufen wurden gemessen und miteinander verglichen.

| **Papier im Feedstock (Gew.-%)** | **Stickstoffverbindung** | **Dien-Zahl [g/100g]** |
|---|---|---|
| - | - | **2,8** |
| 2% | - | **1,46** |
| 2% | Monoethanolamin (95%) | **<1,2** |
| 2% | NH₃ (15%) | **<1,2** |

Aus diesen Ergebnissen ist ersichtlich, dass der Zusatz von Papier zum Feedstock zu einer deutlichen Reduktion der Dien-Zahl führen kann. Dieser Effekt wir durch die Anwesenheit eines Amins noch zusätzlich verstärkt.

## Patentansprüche

1. Verfahren zur Reinigung eines synthetischen Rohölstroms (1), das Verfahren umfassend die folgenden Schritte:
- Bereitstellen des synthetischen Rohölstroms (1), wobei der synthetische Rohölstrom (1) aromatische Verbindungen enthält;
- Inkontaktbringen des synthetischen Rohölstroms (1) mit einem Carbonyl-Strom (2) enthaltend mindestens eine Carbonylverbindung ausgewählt aus einem Aldehyd und einem Keton, um ein Gemisch zu bilden, wodurch zumindest ein Teil der aromatischen Verbindungen zu Kondensationsprodukten vernetzt wird; und
- Abscheiden der Kondensationsprodukte aus dem Gemisch, um einen gereinigten synthetischen Rohölstrom (3) zu erhalten.

2. Das Verfahren gemäß Anspruch 1, wobei der synthetische Rohölstrom (1) einen Aromatengehalt von mindestens 10 Gew.-% aufweist.

3. Das Verfahren gemäß einem der vorangehenden Ansprüche, wobei das Inkontaktbringen des synthetischen Rohölstroms (1) mit dem Carbonyl-Strom (2) bei einer Temperatur von mindestens 50 °C erfolgt.

4. Das Verfahren gemäß einem der vorangehenden Ansprüche, wobei der Carbonyl-Strom (2) eine wässrige Lösung ist.

5. Das Verfahren gemäß einem der vorangehenden Ansprüche, wobei das Inkontaktbringen des synthetischen Rohölstroms (1) mit dem Carbonyl-Strom (2) in Anwesenheit einer Säure oder einer Base erfolgt und/oder wobei dem Gemisch aus dem synthetischen Rohölstrom (1) und dem Carbonyl-Strom (2) eine Säure oder eine Base zugefügt wird.

6. Das Verfahren gemäß einem der vorangehenden Ansprüche, wobei die mindestens eine Carbonylverbindung Formaldehyd ist.

7. Das Verfahren gemäß einem der vorangehenden Ansprüche, wobei die Konzentration der Carbonylverbindungen bezogen auf die Gesamtmasse des synthetischen Rohölstroms (1) und des Carbonyl-Stroms (2) mindestens 0,01 Gew.-% beträgt.

8. Das Verfahren gemäß einem der vorangehenden Ansprüche, wobei das aus dem synthetischen Rohölstrom (1) und dem Carbonyl-Strom (2) gebildete Gemisch eine polare Phase und eine apolare Phase aufweist, wobei die Kondensationsprodukte mehrheitlich in der polaren Phase vorliegen und wobei das Abscheiden der Kondensationsprodukte aus dem Gemisch durch Abtrennen der polaren Phase erreicht wird.

9. Das Verfahren gemäß einem der vorangehenden Ansprüche, wobei das Inkontaktbringen des synthetischen Rohölstroms (1) mit dem Carbonyl-Strom (2) in Anwesenheit einer Stickstoffverbindung erfolgt und/oder wobei dem Gemisch aus dem synthetischen Rohölstrom (1) und dem Carbonyl-Strom (2) eine Zusammensetzung (4) enthaltend eine Stickstoffverbindung zugefügt wird.

10. Das Verfahren gemäß einem der vorangehenden Ansprüche, wobei die mindestens eine Stickstoffverbindung ausgewählt ist aus Ammoniak, einem primären Amin, und/oder einem sekundären Amin; vorzugsweise aus Ammoniak, Methylamin, Dimethylamin, Ethylamin, Diethylamin, Ethanolamin, Diethanolamin, 3-Methoxypropylamin, Dibutylamin, Morpholin, und/oder Triethylamin.

11. Das Verfahren gemäß einem der vorangehenden Ansprüche, wobei die Konzentration der Stickstoffverbindungen bezogen auf die Gesamtmasse des synthetischen Rohölstroms (1) und des Carbonyl-Stroms (2) mindestens 0,01 Gew.-% beträgt.

12. Das Verfahren gemäß einem der vorangehenden Ansprüche, wobei der synthetische Rohölstrom (1) durch Depolymerisation von Kunststoffmaterial, insbesondere von Kunststoffabfall, erzeugt wird.

13. Verfahren zur Herstellung eines gereinigten synthetischen Rohölstroms (3) aus einem Kunststoffmaterial, umfassend die folgenden Schritte:
- Bereitstellen des Kunststoffmaterials, wobei das Kunststoffmaterial eine Carbonylquelle enthält;
- Pyrolysieren des Kunststoffmaterials um einen synthetischen Rohölstrom (1) enthaltend aromatische Verbindungen zu erhalten, wobei aus der Carbonylquelle mindestens eine Carbonylverbindung ausgewählt aus einem Aldehyd und einem Keton freigesetzt wird, und wobei die mindestens eine Carbonylverbindung zumindest einen Teil der aromatischen Verbindungen zu Kondensationsprodukten vernetzt; und
- Abscheiden der Kondensationsprodukte, um einen gereinigten synthetischen Rohölstrom (3) zu erhalten.

14. Verfahren gemäß Anspruch 13, wobei die Carbonylquelle Zellulose und/oder Stärke umfasst.

15. Verfahren gemäß Anspruch 13 oder 14, wobei das Kunststoffmaterial stickstoffhaltige Polymere, vorzugsweise Polyamide, enthält, wobei beim Pyrolysieren des Kunststoffmaterials die stickstoffhaltigen Polymere zumindest teilweise zersetzt werden und mindestens eine Stickstoffverbindung ausgewählt aus Ammoniak, einem primären Amin, und/oder einem sekundären Amin gebildet wird.
